# EUROPEAN PATENT SPECIFICATION

(11) **EP 4 056 974 B1**
(45) Date of publication and mention of the grant of the patent: **22.05.2024**
(21) Application number: 21161299.9
(22) Date of filing: 08.03.2021
(51) Int. Cl.: G01K 13/02

(54) **MEASURING APPARATUS WITH THERMOWELL WITH REDUCED SENSITIVITY TO VORTEX INDUCED VIBRATIONS**
MESSGERÄT MIT SCHUTZROHR MIT VERMINDERTER EMPFINDLICHKEIT GEGENÜBER WIRBELINDUZIERTEN SCHWINGUNGEN
APPAREIL DE MESURE AVEC PUITS THERMOMÉTRIQUE PRÉSENTANT UNE SENSIBILITÉ RÉDUITE AUX VIBRATIONS INDUITES PAR VORTEX

(43) Date of publication of application: 14.09.2022
(73) Proprietor: Endress+Hauser Wetzer GmbH+Co. KG, 87484 Nesselwang (DE)
(72) Inventor: Fortunato, Gianluca, 20153 Milano (IT); Eralti, Davide, 20854 Vedano Al Lambro (IT)
(74) Representative: Peguiron, Anke

(56) References cited:
- WO-A1-2020/035402
- JP-A- 2012 175 724
- US-A1- 2008 031 306
- US-A1- 2019 242 792
- US-B2- 7 836 780

## Description

The invention refers to a protective tube for insertion into a pipe or vessel containing a medium and a measuring apparatus for determining and/or monitoring a process variable of a medium, comprising a protective according to the present invention.

Protective tubes in the field of measuring inserts for determining and/or monitoring a process variable of a medium are e.g. known in the form of thermowells for thermometers which serve for determining and/or monitoring the temperature of a medium. The measuring insert of a thermometer usually at least comprises one temperature sensor for determining and/or monitoring the temperature of the medium. The temperature sensor in turn comprises at least one temperature-sensitive component, e.g. in the form of a resistive element, especially a platinum element, or in the form of a thermocouple. However, protective tubes are also known in connection with gas sampling probes, where a gas sample is, especially dynamically, taken out from a pipe or vessel. The present invention thus generally relates to fluid processing and related measurements employing insertion type probe bodies and is not restricted to thermowells or gas sampling probes.

Such protective tubes are frequently exposed to the flow of the respective medium which causes different mechanical forces acting on the protective tube, e. g. shear forces or forces induced by coherent vortex shedding and which can result in vortex induced vibrations (VIV). Vortex shedding in fluid dynamics is known as "Kármán vortex street" and refers to a repeating pattern of swirling vortices in alternating directions caused by the unsteady separation of flow of a medium around a body, causing said body to vibrate. The closer the frequency of the vibrations is to the natural frequency of the body around which the medium flows, the more the body vibrates. The frequency of the vibrations is e. g. determined by several process parameters, such as the physical properties of the medium, the flow velocity and the shape of the body.

Due to the high risk of damage of protective tubes subject to VIV, these vibrations e.g. need to be duly considered during production. E.g. in the case of thermometers, standard methods, such as ASME PTC 19.3 TW-2000, are available, which define several design rules that help to reduce negative effects of coherent vortex shedding. The basic principle underlying the design rules is to increase the natural frequency of vibrations of the thermometer to separate the natural frequency from the vortex shedding frequency. In such way, the dangerous condition of resonant vortex induced vibrations becomes minimized. For this purpose, commonly the geometry of the thermometer is varied, e. g. by reducing its length and/or by increasing its diameter.

Alternatively, when functional constraints don't allow certain changes in the dimensions of the thermometer, mechanical supports or absorbers are frequently used to reduce the thermometer's sensitivity to vortex shedding. These mechanical supports or absorbers are usually fitted into a gap between the opening of the vessel or pipe and the outside surface of the thermometer. The supports or absorbers then increase the natural frequency of the thermometer by reducing the free length of the thermometer. However, it proves difficult to fit the supports or absorbers in such a way that a high level of coupling and therefore the desired effect can be achieved.

Yet, another approach to reduce VIV of protective tubes is to provide certain structures or structural elements on the protective tube. US 2004/0051004 A1 e.g. describes a smoothly curved protuberances which are added to an elongate body to reduce vortex shedding. The elongate bodies can then be adapted for example for use as chimneys of a factory, towers of a wind turbine, a support member of an offshore platform or an underwater cable.

US 8,500,367 B2 in turn describes a way to protect a marine riser against vibrations caused by vortex shedding. The riser is routed through discoidal elements at regular intervals which have U-shaped indentations along their circumference.

US 6,401,646 B1 teaches about a shell that can be secured to an underwater cable, for example. Said shell has fins at opposite locations to reduce vortex shedding.

In the field of thermometers, it has e. g. become known from EP03184980A1 to minimize a thermometer's sensitivity towards vortex shedding by providing a tubular sheath, which is perforated by circular holes of equal diameter. The sheath is fitted on the thermowell in such a way that the sheath covers at least an end section of the thermowell which faces the medium. In contrast, US9528918B2 suggests a thermowell with a curved outer surface.

Another successful approach to reduce vortex shedding of a protective tube is to provide helical fins on the outer surface of the protective tube as e.g. described in US3076533A, US4991976, US2019/242792A1, US7424396B2, US653931B1, US7836780B2
US2013/0142216A1, GB2442488A or WO2020/035402A1 for different configurations. JP2012175724A discloses a protective sheath for an electric cable that prevents vortex induced vibrations due to wind.

Based on these approaches the objective technical problem underlying the present invention to provide an alternative for a protective tube with reduced sensitivity to vortex induced vibrations.

This problem is solved by means of the measuring apparatus with the protective tube according to claim 1. Preferred embodiments are subject to the dependent claims.

The measuring apparatus according to the present invention comprises a protective tube for insertion into a pipe or vessel containing a medium, wherein the protective tube serves for receiving a measuring insert for determining and/or monitoring a process variable of a medium, especially the temperature of a medium. The protective tube comprises a tubular member having a bore extending between an upper and lower end of the tubular member, wherein at least one section of an outer surface of the tubular member comprises a surface structure having a multitude of longitudinal ribs, which define a multitude of flow channels along the tubular member. The flow channels each evolve between a pair of neighboring ribs, wherein the longitudinal ribs of the surface structure evolve at least partially parallel to a longitudinal axis of the tubular member,and/or wherein the longitudinal ribs are designed such that they twist around the tubular member along its length with a rip pitch, and wherein the rip pitch of the twisting ribs is such that the ribs circle the tubular member a maximum of twice.

The protective tube is usually mounted on the pipe or vessel via an opening which may have a process connection for connecting the protective tube to the vessel or pipe. The protective tube at least partially extends into an inner volume of the vessel or pipe and is at least partially in contact with the flowing medium. The protective tube may be arranged such that its longitudinal axis proceeds perpendicular to the flow direction of the medium. However, also angles between the longitudinal axis and the flow direction different from 90° can be employed.

Embodiments provide a protective tube for which at least one section of the tubular member is provided with a corrugated surface. The ribs of the surface structure preferably evolve at least partially parallel to a longitudinal axis of the tubular member. The flow channels each evolve between a pair of neighboring ribs. The surface structure drastically decreases VIV.

In one embodiment the surface structure is designed such that at least one geometrical parameter of at least one rib depends on at least one process condition of the medium in the vessel or pipe. Choosing geometrical parameters of the surface structure in dependence of the medium enables to provide a protective tube optimized for the specific applied process. The geometrical parameter is at least one parameter defining the form and/or shape of surface structure. All these medium and pipe/vessel related parameters do have an impact on VIV. The geometrical parameters characterizing the surface structure are functions of the process conditions.

In this regard, it is of advantage, if the process condition is at least one of a flow profile, a flow velocity, a pressure, a temperature, a density or a viscosity of the medium, a diameter, volume or roughness of the pipe or vessel, or a length or diameter of the tubular member.

It is further of advantage, if the geometrical parameter is given by the number of ribs, by at least one parameter defining the form and/or shape of the ribs, especially a rib height, a rib angle given by the angle between a tangent to the outer contour of the tubular member and a tangent to the surface of the ribs, a cross sectional area of the ribs, or a transition radius between a rib and the tubular member, or by a quantity derived by at least one of the parameters. For instance, by means of the rib height and an outer diameter of the tubular member, a main ratio of the ribs can be derived given by the quotient of the rib height and outer diameter.

Preferred ranges for the main ratio are 0.001 <k<2, while the number of ribs is preferably two or more and the rib angle preferably is in the range between 0°-90°.

It is also advantageously, if the at least one geometrical parameter varies along the length of the tubular member. This offers another degree of adaptability of the surface structure to a specific application.

The protective tube can be used in a wide range of applications and can e.g. be part of a gas sampling probe with an inlet and outlet end or a Pitot tube. However, in one embodiment, the protective tube is a thermowell, and the tubular member is closed in one end section. That way, a protective tube in the form of a thermowell is provided. In such case, the protective tube may serve for receiving a measuring insert for determining and/or monitoring a process variable of a medium, especially the temperature of the medium. The measuring insert in turn preferably has a rod like form and may be inserted into the bore of the tubular member.

Several options are available for the surface structure according to the present invention which all fall under the scope of protection of the present invention. Several preferred embodiments are depicted in the following:
One embodiment of the protective tube comprises, that the cross-sectional area of the ribs has a triangle, rectangular, square, trapezoidal, hemispherical, polygonal, or curved shape.

In another embodiment the tubular member is constructed such that it has alternating sections comprising and sections not comprising the surface structure.

In this regard it is advantageously if an outer diameter of the sections comprising the surface structure is larger than or equal to an outer diameter of the sections not comprising the surface structure. The sections without the surface structure may e.g. be constructed in the form of a cylindrical section.

In one embodiment, an outer contour of the tubular member tapers between its upper and lower end.

Another embodiment comprises, that the ribs are designed such that they twist around the tubular member along its length.

Regarding the twisting of the ribs it is of advantage, if a pitch of the twisting ribs is such that the ribs circle the tubular member a maximum of twice.

The objective technical problem underlying the present invention is achieved by means of a measuring apparatus for determining and/or monitoring a process variable of a medium, comprising a protective tube according to at least one of the embodiments described.

According to the invention, the protective tube serves for receiving a measuring insert for determining and/or monitoring a process variable of a medium, especially the temperature of a medium.

The present invention will now be explained in more detail by means of Figures Fig. 1-Fig.7.
Fig. 1: illustrates the origin of vortex shedding for an insertion body exposed to a flowing medium;
Fig. 2: shows a thermometer having a state of the art thermowell;
Fig. 3: shows a thermowell according to the present invention, whereas (a) shows a sectional view, (b) shows a first embodiment of the cross-sectional area of the tubular member comprising a surface structure, and (c) several possible embodiments for constructing the surface structure;
Fig. 4: shows a second embodiment of a protective tube in the form of a thermowell in which the ribs of the surface structure twist around the tubular member;
Fig. 5: shows a third embodiment of a protective tube in the form of a thermowell with alternating sections with and without the surface structure; and
Fig. 6: shows a fourth embodiment of a protective tube in the form of a thermowell, the outer contour of the tubular member tapering between its upper and lower end.

In the figures, the same elements are always provided with the same reference symbols.

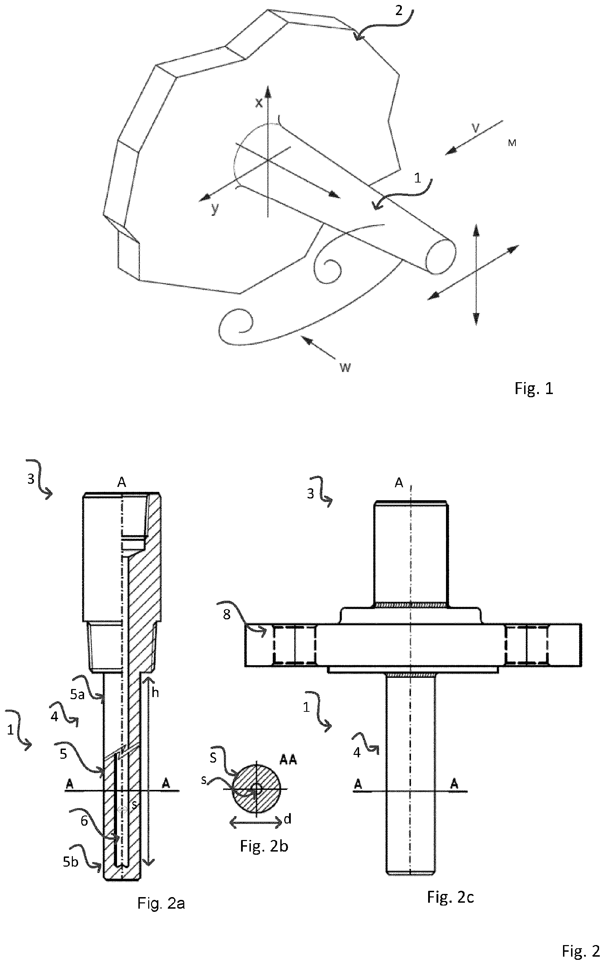

Fig. 1 illustrates the origin of vortex shedding w at a cylindrical, conically tapered protective tube 1 exposed to a flowing medium M in a pipe 2, which is indicated by one of its walls. Downstream of the protective tube 1 in the flow direction v of the medium, a ridge-like pattern develops. Depending on the flow velocity v of the medium M, this can lead to coherent vortex shedding which in turn may cause the protective tube 1 to vibrate.

The vibrations are mainly due to two forces acting on the protective tube 1, a shear force in the in y-direction and a lifting force in x-direction. The shear force causes oscillations at a frequency fₛ, while the lifting force causes oscillates at a frequency of 2fₛ. The frequency fₛ now depends on the flow velocity v of the medium M, and on various physical or chemical medium properties such as its viscosity and density, as well as on the dimensions of the protective tube 1, such as its diameter and length. The closer the frequency fₛ is to the natural frequency of the protective tube 1 and the higher the flow velocity v of the medium M, the greater are the resulting oscillation causing forces.

As a result of the vibration causing forces, the protective tube 1 can be damaged or even break down completely. This is known as the so-called resonance condition.

Fig. 2 exemplarily and without limitation to such an embodiment of the protective tube 1 shows a state of the art thermometer 3 having a protective tube 1 in the form of a thermowell 4. As can be seen in Fig. 2a, the thermowell 4 comprises a tubular member 5 having a first end section 5a, and a second end section 5b with a closed end. The tubular member 5 further comprises a bore 6 forming a hollow space within the tubular member 5, which is defined by an inner surface s and a predeterminable height h parallel to a longitudinal axis A of the tubular member 5, which bore 6 serves for receiving a measuring insert 7 [not shown] for determining and/or monitoring the process variable, e.g. the temperature of the medium M.

Further, as illustrated in Fig. 2c, a fastening unit 8 is provided, which exemplarily is attached to the tubular member 5, here. This fastening unit 8 is a process connection and serves for mounting the thermowell 4 to the pipe 2 [not shown] such that the tubular member 5 at least partially extends into an inner volume of pipe 2 and such that it is at least partially in contact with the flowing medium M.

The outer surface S the thermowell 4 of Fig. 2 has an essentially round shape as becomes visible in Fig. 2b. However, such construction can easily lead to undesired vortex induced vibrations of the thermometer 3.

To overcome the problems associated with coherent vortex shedding, protective tubes 1 certain structures or structural elements on the protective tube may be provided. One effective and easily implementable option for such protective tube 1 with reduced sensitivity to vortex induced vibrations is described in the following.

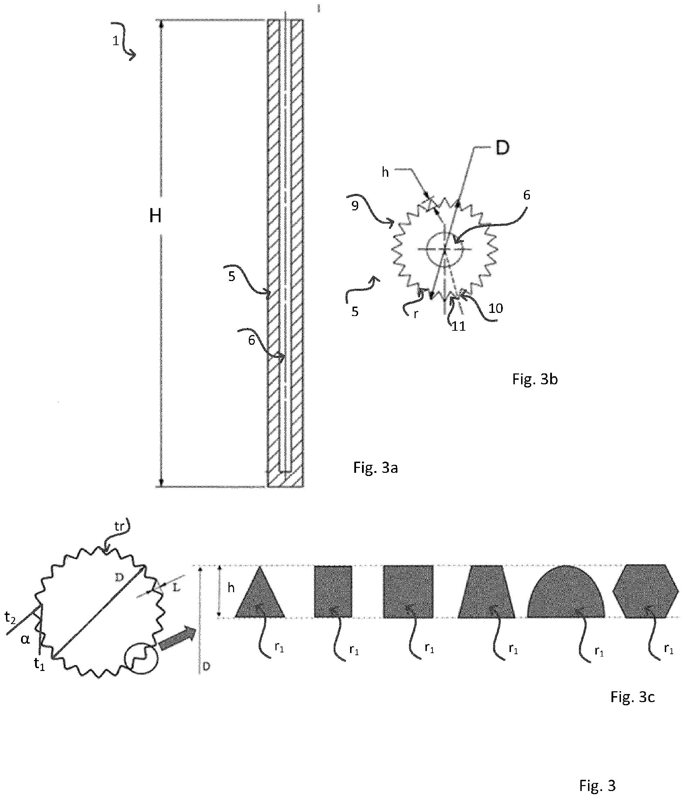

A first embodiment of the present invention is subject to Fig. 3. Fig. 3a shows a sectional view of tubular member 5 of the protective tube 1 with length H. Fig. 3b shows a cross-sectional view of the tubular member 5 of Fig. 3a. The tubular member 5 comprises a surface structure 9 similar to a saguaro cactus type shape. The structure 9 comprises a multitude of longitudinal ribs 10, which for the embodiment shown in Fig. 3 are proceeding parallel to the length axis A of the tubular member 5. The ribs 10 in turn define a multitude of flow channels 11 therebetween which also proceed parallel to axis A.

Many different options exist for the concrete design of the surface structure 9. The surface structure 9 may e.g. be designed such that at least one geometrical parameter of at least one rib 10 depends on at least one process condition of the medium M in the vessel or pipe. Geometrical parameters of the ribs 10 are e.g. given by the numbers n of the ribs 10, and/or different forms or shapes of the ribs 10, e.g. the rib height h, a rib angle α, or a transition radius tr between a rib 10 and the tubular member 5, in particular the surface of the tubular member 5. The transition radius tr can e.g. be such, that the surfaces of the ribs 10 tangentially merge with the surface of the tubular member 10 in a transition area between two adjacent ribs 10 thus providing for a continuous transition.

The surface of the tubular member 5 on the other hand can either remain unmodified, e.g. circular, in that transition area, or it can be curved, in particular concave.

One or more geometrical parameter might differ between different embodiments. As exemplarily illustrated in Fig. 3c, the surface structure 9 can be employed with a triangular r₁, rectangular r₂, square-type r₃, trapezoidal r₄, hemispherical or curved r₅ or polygonal r₅ cross-sectional area r. Any of the cross-sectional area r shapes shown can also be employed with rounded corners. Also, any geometrical parameter n, h, α, r may also vary along the length H of the tubular member 5 or between different embodiments of the tubular member 5.

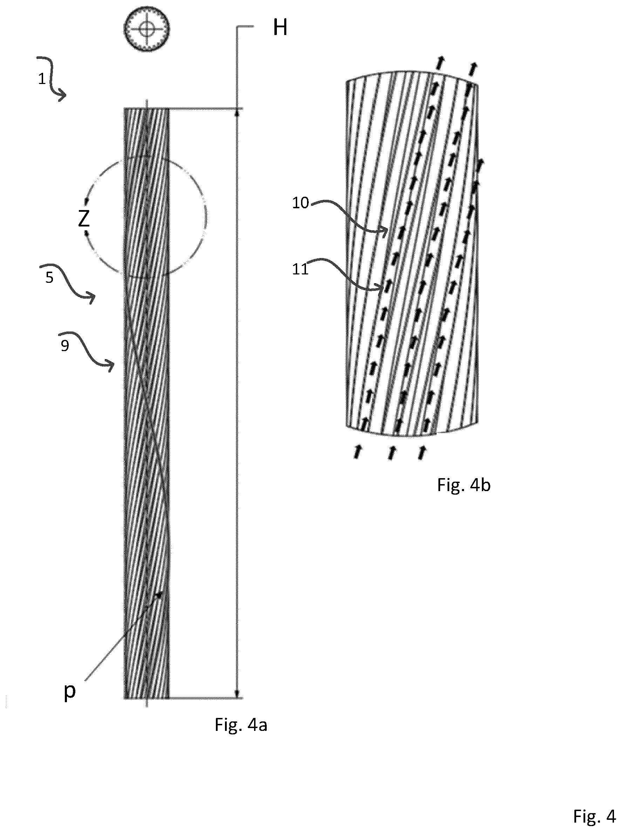

A second embodiment of the protective tube 1 according to the present invention is shown in Fig. 4. The tubular member 5 shown in the sectional view given in Fig. 4a comprises a surface structure 9 on its outer surface which is better visible in the enlarged section Z shown in Fig. 4b. The surface structure 9 comprises a multitude of ribs 10 defining a multitude of flow channels 11 therebetween. In contrast to the embodiment shown in Fig. 3 the ribs 10 are twisting around the tubular member 5 along its length H with a certain rib pitch p. Preferably, the ribs 10 circle the tubular member 5 a maximum of twice. Such additional twisting highly enhances the effectiveness in minimizing vortex shedding.

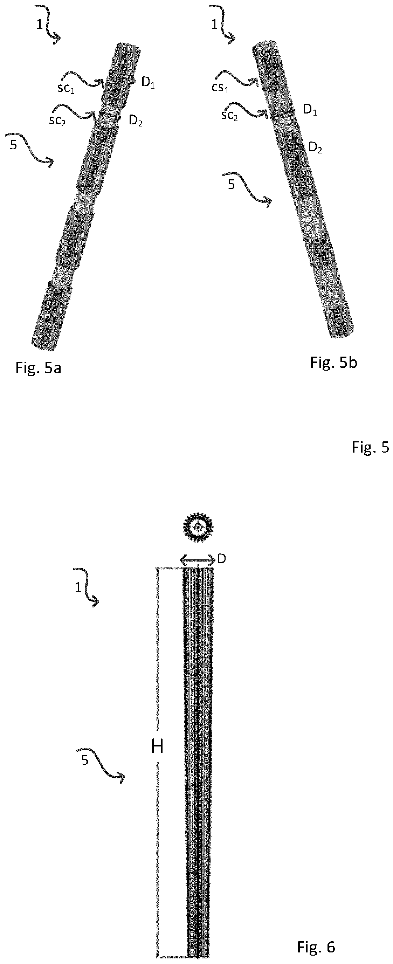

Fig. 5 illustrated a third embodiment of the present invention in which the tubular member 5 comprises alternating sections sc₁ comprising the surface structure 9 and sections sc₂ not comprising the surface structure 9. While in case of fig. 5a the outer diameter D₁ in sections sc₁ comprising the surface structure is larger than the diameter D₂ of sections sc₂ without the surface structure, the diameters D₁ and D₂ of the different sections sc₁ and sc₂ are essentially equal in case of Fig. 5b.

Finally, a fourth embodiment is shown in Fig. 6. In contrast to the previously shown embodiments, the outer contour of the tubular member 5, i.e its diameter D, tapers between its upper 5a and lower end 5b. The outer diameter D of the tubular member continuously decreases from the upper 5a towards the lower 5b end section. Other embodiments can also employ a stepwise decrease in diameter D.

### List of reference symbols

- 1: protective tube
- 2: pipe, vessel
- 3: thermometer
- 4: thermowell
- 5: tubular member
- 5a: first end section
- 5b: second end section
- 6: bore
- 7: measuring insert
- 8: fastening unit
- 9: surface structure
- 10: ribs
- 11: flow channel
- M: medium
- v: velocity of the medium
- vᵣₑₗ: relative flow velocity
- v (x,y): flow profile
- W: vortex shedding
- A: longitudinal axis of the tubular member
- s: inner cross-sectional surface
- S: outer cross-sectional surface
- d: pipe diameter
- H: length of tubular member
- D, D1, D2: diameter of tubular member
- h: rib height
- r: rib cross-sectional area
- α: rib angle
- p: rib pitch
- sc,sc₁,sc₂: section of tubular member

## Claims

1. Measuring apparatus with a protective tube (1) for insertion into a pipe or vessel (2) containing a medium (M), wherein the protective tube (1) serves for receiving a measuring insert for determining and/or monitoring a process variable of a medium (M), especially the temperature (T) of a medium (M), the protective tube (1) comprising
a tubular member (5) having
a bore (6) extending between an upper (5a) and lower end (5b) of the tubular member (5),
wherein at least one section (sc) of an outer surface (S) of the tubular member (5) comprises a surface structure (9) having a multitude of longitudinal ribs (10), which define a multitude of flow channels (11) along the tubular member (5), wherein the flow channels each evolve between a pair of neighboring ribs,
**characterised in that** the longitudinal ribs of the surface structure evolve at least partially parallel to a longitudinal axis of the tubular member,
and/or
wherein the longitudinal ribs (10) are designed such that they twist around the tubular member (5) along its length (H) with a rip pitch, and wherein the rip pitch (p) of the twisting ribs (10) is such that the ribs (10) circle the tubular member (5) a maximum of twice.

2. Measuring apparatus according to claim 1,
wherein the surface structure (9) is designed such that at least one geometrical parameter of at least one rib (10) depends on at least one process condition of the medium (M) in the vessel or pipe (2), such that the protective tube is optimized for the process condition,
wherein the process condition is at least one of a flow profile, a flow velocity (v), a pressure, a temperature (T), a density or a viscosity of the medium (M), a diameter (d), volume or roughness of the pipe or vessel (2), or a length (H) or diameter (D) of the tubular member (5),
and wherein the geometrical parameter is given by the number (n) of ribs (10), by at least one parameter defining the form and/or shape of the ribs (10), especially a rib height (h), a rib angle (α) given by the angle between a tangent (t₁) to the outer contour of the tubular member (5) and a tangent (t₂) to the surface of the ribs (10), a cross sectional area (r) of the ribs (10), or a transition radius (tr) between a rib (10) and the tubular member (5), or by a quantity derived by at least one of the parameters.

3. Measuring apparatus according to claim 2,
wherein the at least one geometrical parameter varies along the length (H) of the tubular member (5).

4. Measuring apparatus according to any of the preceding claims,
wherein the protective tube (1) is a thermowell, and the tubular member (5) is closed in one end section (5b).

5. Measuring apparatus according to any of the preceding claims,
wherein the cross sectional area (r) of the ribs (10) has a triangle, rectangular, square, trapezoidal, hemispherical, polygonal, or curved shape.

6. Measuring apparatus according to any of the preceding claims,
wherein the tubular member (5) is constructed such that it has alternating sections (sc₁,sc₂) comprising and not comprising the surface structure (9.

7. Measuring apparatus according to claim 6,
wherein an outer diameter (D₁) of the sections (cs₁) comprising the surface structure (9) is larger than or equal to an outer diameter (D₂) of the sections (cs₂) not comprising the surface structure (9).

8. Measuring apparatus according to any of the preceding claims,
wherein an outer contour of the tubular member (5) tapers between its upper (5a) and lower end (5b).

## Patentansprüche

1. Messvorrichtung mit einem Schutztubus (1) zum Einsatz in ein Rohr oder einen Behälter (2), das oder der ein Medium (M) enthält, wobei der Schutztubus (1) zur Aufnahme eines Messeinsatzes zur Bestimmung und/oder Überwachung einer Prozessvariablen eines Mediums (M), insbesondere der Temperatur (T) eines Mediums (M), dient, wobei der Schutztubus (1) ein tubulares Element (5) umfasst, das eine Bohrung (6) aufweist, die sich zwischen einem oberen (5a) und einem unteren Ende (5b) des rohrförmigen Elements (5) erstreckt,
wobei mindestens ein Abschnitt (sc) einer Außenfläche (S) des tubularen Elements (5) eine Oberflächenstruktur (9) umfasst, die eine Vielzahl von Längsrippen (10) aufweist, die eine Vielzahl von Strömungskanälen (11) entlang des tubularen Elements (5) definieren, wobei die Strömungskanäle jeweils zwischen einem Paar benachbarter Rippen verlaufen,
**dadurch gekennzeichnet, dass**
die Längsrippen der Oberflächenstruktur mindestens teileweise parallel zu einer Längsachse des tubularen Elements verlaufen,
und/oder
wobei die Längsrippen (10) so ausgelegt sind, dass sie sich um das tubulare Element (5) entlang seiner Länge (H) mit einem Rippenabstand (p) drehen, und wobei der Rippenabstand (p) der drehenden Rippen (10) dergestalt ist, dass die Rippen (10) das tubulare Element (5) maximal zweimal umlaufen.

2. Messvorrichtung nach Anspruch 1,
wobei die Oberflächenstruktur (9) so ausgelegt ist, dass mindestens ein geometrischer Parameter mindestens einer Rippe (10) von mindestens einer Prozessbedingung des Mediums (M) im Behälter oder im Rohr (2) abhängt, sodass der Schutztubus für die Prozessbedingung optimiert ist,
wobei die Prozessbedingung mindestens eines des Folgenden ist: ein Strömungsprofil, eine Strömungsgeschwindigkeit (v), ein Druck, eine Temperatur (T), eine Dichte oder eine Viskosität des Mediums (M), ein Durchmesser (d), ein Volumen oder eine Rauheit des Rohrs oder Behälters (2), oder eine Länge (H) oder ein Durchmesser (D) des tubularen Elements (5),
und wobei der geometrische Parameter gegeben ist durch die Anzahl (n) an Rippen (10), durch mindestens einen Parameter, der die Form und/oder Gestalt der Rippen (10) definiert, insbesondere eine Rippenhöhe (h), ein Rippenwinkel (α), gegeben durch den Winkel zwischen einer Tangente (t₁) an der Außenkontur des tubularen Elements (5) und einer Tangente (t₂) an der Oberfläche der Rippen (10), eine Querschnittsfläche (r) der Rippen (10), oder ein Übergangsradius (tr) zwischen einer Rippe (10) und dem tubularen Element (5), oder durch eine Größe, die von mindestens einem der Parameter abgeleitet wird.

3. Messvorrichtung nach Anspruch 2,
wobei der mindestens eine geometrische Parameter entlang der Länge (H) des tubularen Elements (5) variiert.

4. Messvorrichtung nach einem der vorhergehenden Ansprüche, wobei der Schutztubus (1) ein Schutzrohr ist, und das tubulare Element (5) in einem Endabschnitt (5b) geschlossen ist.

5. Messvorrichtung nach einem der vorhergehenden Ansprüche, wobei die Querschnittsfläche (r) der Rippen (10) eine Dreiecks-, Rechteck-, Quadrat-, Trapez-, Halbkugel-, Polygonform, oder eine gekrümmte Form aufweist.

6. Messvorrichtung nach einem der vorhergehenden Ansprüche, wobei das tubulare Element (5) so konstruiert ist, dass es alternierende Abschnitte (sc₁,sc₂) aufweist, die die Oberflächenstruktur (9) umfassen oder nicht umfassen.

7. Messvorrichtung nach Anspruch 6,
wobei ein Außendurchmesser (D₁) der Abschnitte (cs_{I}), die die Oberflächenstruktur (9) umfassen, größer oder gleich einem Außendurchmesser (D₂) der Abschnitte (cs₂), die die Oberflächenstruktur (9) nicht umfassen, ist.

8. Messvorrichtung nach einem der vorhergehenden Ansprüche,
wobei sich eine Außenkontur des tubularen Elements (5) zwischen ihrem oberen (5a) und unteren Ende (5b) verjüngt.

## Revendications

1. Appareil de mesure comprenant un tube de protection (1) pour l'insertion dans une conduite ou un réservoir (2) contenant un produit (M), le tube de protection (1) servant à recevoir un insert de mesure destiné à déterminer et/ou à surveiller une variable de process d'un produit (M), notamment la température (T) d'un produit (M), lequel tube de protection (1) comprend
un élément tubulaire (5) présentant un alésage (6) s'étendant entre une extrémité supérieure (5a) et une extrémité inférieure (5b) de l'élément tubulaire (5),
au moins une section (sc) d'une surface extérieure (S) de l'élément tubulaire (5) comprenant une structure de surface (9) comportant une multitude de nervures longitudinales (10), lesquelles nervures définissent une multitude de canaux d'écoulement (11) le long de l'élément tubulaire (5),
les canaux d'écoulement évoluant chacun entre une paire de nervures voisines, **caractérisé**
**en ce que** les nervures longitudinales de la structure de surface évoluent au moins partiellement parallèlement à un axe longitudinal de l'élément tubulaire,
et/ou
**en ce que** les nervures longitudinales (10) sont conçues de manière à se tordre autour de l'élément tubulaire (5) sur sa longueur (H) avec un pas de nervure, et le pas de nervure (p) des nervures de torsion (10) étant tel que les nervures (10) font au maximum deux fois le tour de l'élément tubulaire (5).

2. Appareil de mesure selon la revendication 1,
pour lequel la structure de surface (9) est conçue de telle sorte qu'au moins un paramètre géométrique d'au moins une nervure (10) dépend d'au moins une condition de process du produit (M) dans le réservoir ou la conduite (2), de telle sorte que le tube de protection est optimisé pour la condition de process, pour lequel la condition de process est au moins l'une des suivantes : un profil d'écoulement, une vitesse d'écoulement (v), une pression, une température (T), une densité ou une viscosité du produit (M), un diamètre (d), un volume ou une rugosité de la conduite ou du réservoir (2), ou une longueur (H) ou un diamètre (D) de l'élément tubulaire (5), et
pour lequel le paramètre géométrique est défini par le nombre (n) de nervures (10), par au moins un paramètre définissant la forme et/ou l'aspect des nervures (10), notamment une hauteur de nervure (h), un angle de nervure (α) défini par l'angle entre une tangente (t₁) au contour extérieur de l'élément tubulaire (5) et une tangente (t₂) à la surface des nervures (10), une surface de section transversale (r) des nervures (10), ou un rayon de transition (tr) entre une nervure (10) et l'élément tubulaire (5), ou par une quantité dérivée d'au moins l'un de ces paramètres.

3. Appareil de mesure selon la revendication 2,
pour lequel l'au moins un paramètre géométrique varie sur la longueur (H) de l'élément tubulaire (5).

4. Appareil de mesure selon l'une des revendications précédentes,
pour lequel le tube de protection (1) est un protecteur et l'élément tubulaire (5) est fermé à une extrémité (5b).

5. Appareil de mesure selon l'une des revendications précédentes,
pour lequel la section transversale (r) des nervures (10) présente une forme triangulaire, rectangulaire, carrée, trapézoïdale, hémisphérique, polygonale ou incurvée.

6. Appareil de mesure selon l'une des revendications précédentes,
pour lequel l'élément tubulaire (5) est construit de telle sorte qu'il présente une alternance de sections (sc₁, sc₂) comprenant et ne comprenant pas la structure de surface (9).

7. Appareil de mesure selon la revendication 6,
pour lequel un diamètre extérieur (D₁) des sections (cs₁) comprenant la structure de surface (9) est supérieur ou égal à un diamètre extérieur (D₂) des sections (cs₂) ne comprenant pas la structure de surface (9).

8. Appareil de mesure selon l'une des revendications précédentes,
pour lequel le contour extérieur de l'élément tubulaire (5) s'amincit entre son extrémité supérieure (5a) et son extrémité inférieure (5b).
